(19) Europäisches Patentamt European Patent Office Office européen des brevets

(11) **EP 4 298 410 B1**

(12) **EUROPÄISCHE PATENTSCHRIFT**

(45) Veröffentlichungstag und Bekanntmachung des Hinweises auf die Patenterteilung:
**01.01.2025 Patentblatt 2025/01**

(21) Anmeldenummer: **22707431.7**

(22) Anmeldetag: **23.02.2022**

(51) Internationale Patentklassifikation (IPC):
***G01G 3/14*** *(2006.01)*

(52) Gemeinsame Patentklassifikation (CPC):
**G01G 3/1414**

(86) Internationale Anmeldenummer:
**PCT/EP2022/054467**

(87) Internationale Veröffentlichungsnummer:
**WO 2022/180066 (01.09.2022 Gazette 2022/35)**

(54) **WÄGEVORRICHTUNG UND WÄGEVERFAHREN MIT EINER ZENTRALEN DIGITALEN MESSWERTKORREKTUR**

WEIGHING DEVICE AND WEIGHING METHOD WITH A CENTRAL DIGITAL MEASURING VALUE CORRECTION

DISPOSITIF DE PESÉE ET PROCÉDÉ DE PESÉE AVEC UNE CORRECTION CENTRALE DE LA VALEUR DE MESURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2021 DE 102021104430**

(43) Veröffentlichungstag der Anmeldung:
**03.01.2024 Patentblatt 2024/01**

(73) Patentinhaber: **Qlar Europe GmbH**
**64293 Darmstadt (DE)**

(72) Erfinder: **BOUVRON, Samuel**
**64293 Darmstadt (DE)**

(56) Entgegenhaltungen:
**EP-A1- 2 278 283 EP-A2- 1 826 540**

**Beschreibung**

Die vorliegende Erfindung betrifft eine Wägevorrichtung und ein Wägeverfahren mit einer zentralen digitalen Messwertkorrektur.

Wägevorrichtungen werden dazu verwendet, um Kräfte, insbesondere Gewichtskräfte von Wägegütern, zu messen.

Wägevorrichtungen weisen üblicherweise eine Kraftaufnahme, eine Wägezelle und eine Auswerteeinrichtung auf.

Die Kraftaufnahme ist eine bauliche Struktur bzw. ein Körper, auf welchem das Wägegut aufgebracht werden kann, so dass die Kraftaufnahme die Gewichtskraft des Wägegutes aufnimmt und an einen Untergrund ableitet. Die Wägezelle umfasst einen oder mehrere Kraftsensoren und dient der Detektion der von der Kraftaufnahme aufgenommenen Gewichtskraft. Industrielle Wägevorrichtungen können auch mehrere Wägezellen umfassen. Die Wägezellen sind im Kraftschlussweg von der Kraftaufnahme zum Untergrund angeordnet, d.h., dass die vollständige oder einen Teil der Gewichtskraft, der über die Wägezelle(n) in den Untergrund abgeleitet wird, erfassen.

Die Wägezellen können Formänderungen an einem Messkörper, der mit der Kraftaufnahme verbunden oder Teil der Kraftaufnahme ist, detektieren, wie zum Beispiel mittels Dehnungsstreifen. Die Dehnungsstreifen können bspw. an einer Stütze der Kraftaufnahme angebracht sein und die Verformung der Stütze detektieren, woraus die anliegende Gewichtskraft bestimmt werden kann. An horizontalen Balken können auf diese Art und Weise auch Scherkräfte gemessen werden, welche proportional zur Gewichtskraft sind. Es gibt daher unterschiedlichste Arten und Weisen, wie die Wägezellen in der Wägevorrichtung angeordnet sein können.

Üblicherweise ist jeder Wägezelle eine Auswerteeinrichtung zugeordnet, mit welcher die mit der Wägezelle gemessene Gewichtskraft bestimmt wird. Weist eine Wägevorrichtung mehrerer Wägezellen auf, dann werden die entsprechenden Gewichtskräfte addiert.

Aus der EP 0 670 479 A1 geht beispielsweise eine solche Wägezelle hervor, in welcher eine modulare Korrektureinrichtung integriert ist. Diese Wägezelle kann auch einen Temperatursensor aufweisen, um die gemessene Temperatur bei der Korrektur der Messsignale zu berücksichtigen.

Aus der JP H11-37827 A geht eine Wägevorrichtung mit einer integrierten Korrekturfunktion hervor. Diese Wägevorrichtung weist unterschiedliche Kennlinien für unterschiedliche Temperaturen und unterschiedliche Belastungsrichtungen auf. Hierdurch werden Temperatur- und Hystereseeffekte korrigiert.

Aus der DE 10 2006 009 005 A1 geht ein Verfahren zum Austauschen von Wägezellen in einer geeichten Wägeanordnung mit mehreren Wägezellen hervor. Dabei sind die Wägezellen mit einer Steuereinheit über mindestens ein BUS-System verbunden. Die Wägezellen übertragen die zu messenden Gewichtswerte in der Form von Spannungen, die in der Steuereinheit entsprechende Zählerwerte hervorrufen. Jede Wägezelle weist einen Satz interner Parameter pro Wägezelle auf. Bei einem Austausch der Wägezellen werden die eingeschriebenen Daten interner Parameter der neuen Wägezelle in der Wägeanordnung in den jeweils internen Parameterspeicher der Wägezellen auslesbar zur Verfügung gestellt.

Aus der GB 1 495 278 A geht ein weiteres Verfahren hervor, bei dem der Temperatureinfluss beim Wägevorgang kompensiert wird.

In der EP 2 457 070 B1 ist eine weitere Wägevorrichtung offenbart, welche einen Temperatursensor aufweist, um temperaturabhängige Effekte zu korrigieren.

Die EP 2 278 283 A1 offenbart ein Verfahren zur Temperaturkorrektur einer Kraftmessvorrichtung, insbesondere einer Waage.

Bei der Direktwägetechnik, wie beispielsweise in "news, Neues von SCHENCK PROCESS, Heavy Industry 12.2005DE, 20 Jahre SCHENCK - Direktwägetechnik, optimale wägetechnische Lösungen für die Stahlindustrie", beschrieben, sind die Kraftsensoren bzw. Wägezellen starr mit der Kraftaufnahme verbunden, meist verschraubt oder verklebt.

Daraus ergeben sich für die Direktwägetechnik Vorteile, wie keine beweglichen Teile und keine mechanischen Einstellarbeiten. Weiterhin sind die Wägezellen wartungsarm und unempfindlich gegenüber Verschmutzung.

Diese Direktwägetechnik hat jedoch auch Nachteile. Es werden Querkräfte auf die Wägezellen eingeleitet, welche zu erheblichen Störungen in den Messsignalen führen können. Das Weglassen von Elastomerlagern oder anderen Mitteln zum Abschirmen von Störeinflüssen kann damit das Messergebnis erheblich beeinträchtigen.

Der Erfindung liegt die Aufgabe zugrunde, eine Wägevorrichtung und ein Wägeverfahren zur Verfügung zu stellen, welche es ermöglichen, Kraftmessungen mit hoher Genauigkeit durchzuführen, wobei die hierbei eingesetzte Wägevorrichtung sehr einfach, kostengünstig und zuverlässig ausgebildet sein soll. Diese Aufgabe wird durch die Gegenstände der unabhängigen Patentansprüche gelöst. Vorteilhafte Ausgestaltungen sind in den jeweiligen Unteransprüchen angegeben.

Nach einem ersten Aspekt der vorliegenden Erfindung ist eine Wägevorrichtung mit einer zentralen digitalen Messwertkorrektur vorgesehen, welche zumindest eine Wägezelle umfasst, welche über eine Signal- und/oder Datenleitung mit einer zentralen Auswerteeinrichtung zum Übermitteln eines Gewichtsmesssignals verbunden ist, wobei die zentrale Auswerteeinrichtung eine Auswerteeinheit zum Bestimmen der mit der Wägevorrichtung gemessenen Kraft anhand des Gewichtsmesssignals aufweist.

Die Wägevorrichtung zeichnet sich dadurch aus, dass die Auswerteeinheit ein digitales Funktionsmodell der Wägevorrichtung umfasst, das ein oder mehrere Fehlersimulationsmodule aufweist, wobei ein jedes Fehlersimulationsmodul ein Modell der Wägevorrichtung darstellt, das einen bestimmten Messfehler der Wägevorrichtung simuliert, und jedes Fehlersimulationsmodul ein oder mehrere Modellparameter aufweist, mit welchen die Wägevorrichtung modelliert wird, und eine Lerneinrichtung vorgesehen ist, mit welcher die Modellparameter während eines Lernprozesses bestimmbar sind, bei dem mittels einer oder mehreren Referenzbelastungen Referenz-Messsignale erzeugt werden, wobei das Funktionsmodell ein Kennlinienmodul aufweist, das das Gewichtsmesssignal in ein Gewichtssignal oder umgekehrt wandelt und das Kennlinienmodul Kennlinienparameter aufweist, welche mittels der Lerneinrichtung während des Lernprozesses bestimmt werden.

Wie es unten am Beispiel noch näher erläutert wird, verändert ein Fehlersimulationsmodul ein Signal. Diese Veränderung kann derart ausgeführt werden, dass ein vorbestimmter Fehler dem Signal hinzugefügt wird. Diese Veränderung kann jedoch auch eine Veränderung des Signals dahingehend sein, dass das Signal um einen vorbestimmten Fehler bereinigt bzw. korrigiert wird.

Mit beiden Arten von Fehlersimulationsmodulen ist es möglich ein Funktionsmodell auszubilden, mit dem von der Auswerteeinrichtung ein korrigierter Gewichtswert ausgegeben werden kann, der von den Messfehlern bereinigt ist.

Die zentrale digitale Messwertkorrektur mittels eines digitalen Funktionsmodells, das mittels eines Lernprozesses angelernt wird, erlaubt die Verwendung einer einzelnen oder mehrerer einfachen Wägezellen, die an der Wägevorrichtung integriert sind. Durch das Anlernen der Kennlinie der gesamten Wägevorrichtung mittels des Kennlinienmoduls und das Anlernen des einen oder der mehreren Fehlersimulationsmodule ist eine Kalibrierung einer einzelnen Wägezelle für die gesamte Wägevorrichtung vernachlässigbar, vielmehr wird mittels des Funktionsmodells die Kennlinie und/oder werden die Fehlersimulationsmodule auf einmal oder nacheinander für die gesamte Wägevorrichtung angelernt.

Der mechanische Aufbau der Wägevorrichtung mit einer Kraftaufnahme und einer oder mehreren Wägezellen kann somit zunächst entsprechend den lokalen Begebenheiten aufgebaut werden. Die Wägezellen werden über eine Signal- und/oder Datenleitung mit der zentralen Auswerteeinrichtung verbunden und danach werden die Kennlinienparameter des Kennlinienmoduls und die Modellparameter des einen oder der mehreren Fehlersimulationsmodule angelernt.

Das Funktionsmodell stellt somit die gesamte Wägevorrichtung dar. Durch die Verwendung eines oder mehrerer Fehlersimulationsmodule kann ein sehr einfacher Aufbau der Wägevorrichtung verwendet werden, der zu einem an sich fehlerbehafteten Gewichtsmesssignal führt und/oder es können sehr einfache Wägezellen verwendet werden, welche fehlerbehaftet sind, und/oder die Wägezellen können starr mit der Kraftaufnahme verbunden sein (= Direktwägetechnik), wodurch insbesondere Fehler durch Querkräfte verursacht werden. Alle diese Fehler können mittels des digitalen Funktionsmodells zentral kompensiert werden. Hierdurch wird eine sehr präzise Wägevorrichtung erzielt, wobei gleichzeitig der Aufbau der gesamten Wägevorrichtung sehr einfach und kostengünstig gehalten werden kann. Dies wird vor allem durch die Kombination der zentralen Messwertkorrektur mittels des digitalen Funktionsmodells und des Anlernens des Funktionsmodells mittels der Lerneinrichtung erreicht.

Vorzugsweise sind das Kennlinienmodul zum Wandeln des Gewichtssignals in ein (virtuelles) Gewichtsmesssignal und die Fehlersimulationsmodule zum Verändern dieses Gewichtsmesssignals um eine Fehlerkomponente ausgebildet.

Das Gewichtssignal ist ein analoges oder digitales Signal, das das zu messende Gewicht darstellt. Das Gewichtsmesssignal ist ein Signal, das das von den Wägezellen erzeugten Messsignal entspricht. Bei Verwendung eines einzigen Dehnungsmessstreifens entspricht das Gewichtsmesssignal der Dehnung des Dehnungsmessstreifens.

Bei einem solchen Funktionsmodell ist der Eingangswert das Gewichtssignal und der Ausgangswert ein simuliertes fehlerbehaftetes Gewichtsmesssignal. Ein solches Funktionsmodell lässt sich sehr einfach mittels Referenzbelastungen anlernen.

Grundsätzlich ist es jedoch auch möglich, dass das Kennlinienmodul ein fehlerbehaftetes Gewichtsmesssignal in einen fehlerbehafteten Gewichtswert wandelt und dass das oder die Fehlersimulationsmodule das fehlerbehaftete Gewichtssignal bzw. den fehlerbehafteten Gewichtswert in einen korrigierten Gewichtswert umsetzen. Bei diesem "invertierten" Funktionsmodell ist die Eingangsgröße das fehlerbehaftete, tatsächlich gemessene Gewichtsmesssignal und die Ausgangsgröße der korrigierte Gewichtswert. Diese Fehlersimulationsmodule können auch als Korrekturmodule bezeichnet werden, da sie den Gewichtswert um den jeweiligen Fehler korrigieren. Die Modellierung des invertierten Funktionsmodells ist jedoch wesentlich aufwändiger als die des nicht-invertierten Funktionsmodells.

Vorzugsweise sind einzelne der mehreren Fehlersimulationsmodule ausschaltbar. Im Funktionsmodell können die ausgeschalteten Fehlersimulationsmodule durch den Faktor "1" ersetzt werden, so dass das vom Kennlinienmodul ausgegebene Gewichtsmesssignal oder der ausgegebene Gewichtswert durch ein ausgeschaltetes Fehlersimulationsmodul nicht verändert wird. Die Wägevorrichtung kann mehrere Wägezellen aufweisen, wobei die Signale der einzelnen Wägezellen zu dem Gewichtsmesssignal in einer Messsignal-Sammelstation kombiniert werden. Das Kombinieren der einzelnen Signale zu dem Gewichtsmesssignal erfolgt durch Addieren, wobei auch einzelne Signale mit einem unterschiedlichen Faktor versehen sein können, welcher von "1" abweichen kann, wenn unterschiedliche Hebel an den Wägezellen wirken. Die Faktoren können auch unterschiedliche Vorzeichen aufweisen, wenn gleichzeitig Zug- und Druckbelastungen auf unterschiedliche Wägezellen wirken. Die Kombination der Signale der einzelnen Wägezellen wird durch den Aufbau der Kraftaufnahme festgelegt.

Die Wägezellen können analoge Ausgänge aufweisen, welche mit einer oder mehreren Signalleitungen zum Übermitteln eines analogen Signals mit der zentralen Auswerteeinrichtung verbunden sind. Wägezellen mit analogen Ausgängen sind beispielsweise Dehnungsmessstreifen ohne eigene Signalverarbeitung. Die Wägezellen können auch digitale Ausgänge aufweisen, welche mit einer oder mehreren Datenleitungen zum Übermitteln eines digitalen Signals mit der zentralen Auswerteeinrichtung verbunden sind. Derartigen Wägezellen mit digitalen Ausgängen weisen eine digitale Aufbereitung der in der Regel analog erfassten Messsignale auf.

Die Wägezelle(n) können einen oder mehrere Dehnungsmessstreifen aufweisen. Die Dehnungsmessstreifen (DMS) können insbesondere in einer Wheatstone'schen Messbrücke angeordnet sein.

Die Wägezellen können mit einer starren Verbindung in der Wägevorrichtung integriert sein, d.h. starr an die Kraftaufnahme gekoppelt sein. Die Kraftaufnahme ist ein an sich beliebiger Wägekörper oder zu verwiegender Körper, wie zum Beispiel Behälter, Brücke, Pfanne oder Rahmen, der zur Aufnahme des Wiegegutes dient. Eine starre Verbindung wird beispielsweise mittels einer stoffschlüssigen Verbindung (Löten, Schweißen, Kleben) einer formschlüssigen Verbindung (Schraubverbindung, Pressverbindung) zur Kraftaufnahme hergestellt. Eine starre Verbindung bedeutet, dass keine Elastomerlager oder dergleichen zwischen der Wägezelle und der Kraftaufnahme vorgesehen sind, um beispielsweise Querkräfte oder andere Störkräfte zu eliminieren. Eine solche starre Verbindung ist wartungsfrei, kann jedoch dazu führen, dass Querkräfte und sonstige die Messung störende Kräfte von der jeweiligen Wägezelle aufgenommen werden. Erfindungsgemäß können diese Störwirkungen mittels des digitalen Funktionsmodells zentral korrigiert werden.

Weiterhin kann die Wägevorrichtung so ausgebildet sein, dass der Kraftfluss zwischen der Kraftaufnahme und dem Untergrund ausschließlich über die Wägezelle(n) geleitet wird. Bei einer solchen Ausbildung der Wägevorrichtung sind keine Kraft-Nebenschlüsse vorhanden, die Messfehler verursachen könnten.

Die Wägevorrichtung kann einen oder mehrere Temperatursensoren aufweisen, die in der Nähe zumindest von einer der Wägezellen angeordnet sind. Mit einem solchen Temperatursensor kann die Temperatur im Bereich der Wägezellen erfasst werden und zur Korrektur mittels des digitalen Funktionsmodells verwendet werden.

Vorzugsweise sind zumindest zwei oder mehrere Fehlersimulationsmodule zum Korrigieren jeweils eines der vorliegenden Fehlerursachen vorgesehen:

- Linearität;
- Kriechen (Kraftaufnahme, Wägezelle);
- Hysterese;
- thermische Abweichungen des Nullpunktes;
- Abweichungen des Nullpunktes bzgl. eines thermischen Gradienten;
- Abweichungen der Empfindlichkeit der Wägezellen aufgrund Temperaturänderungen;
- Stöße;
- Position der Last;
- Querkräfte;
- Fehler durch Schrägstellung.

Grundsätzlich ist es im Rahmen der Erfindung möglich, die Wägevorrichtung durch ein sehr allgemeines Funktionsmodell, welches beispielsweise auf einem neuronalen Netzwerk oder einem anderen allgemeinen selbst-lernenden Modell basiert, auszubilden. Eine derart allgemeine Modellierung erfordert jedoch eine Vielzahl von Referenzbelastungen in allen möglichen Zuständen. Die Zustände können in Abhängigkeit der Temperatur, des Belastungsortes und der Belastungsdynamik variieren. Bei einem solchen allgemeinen Modell ist der Lernprozess sehr aufwändig.

Das erfindungsgemäße Funktionsmodell, das ein Kennlinienmodul und zumindest eines und vorzugsweise mehrere Fehlersimulationsmodule umfasst, weist somit bereits von Haus aus eine für die Wägevorrichtung typische Modellstruktur auf, mit der zumindest die Kennlinie und eine oder mehrere Fehlerursachen abgebildet werden. Hierdurch ist das Anlernen des Funktionsmodells wesentlich einfacher und schneller als mit einem allgemeinen Funktionsmodell. Bei einfach ausgebildeten Wägevorrichtungen hat es sich in der Praxis gezeigt, dass mit einigen wenigen Referenzbelastungen sowohl die Kennlinienparameter als auch die Modellparameter zuverlässig bestimmt werden konnten. Bei Wägevorrichtungen zum Wiegen von großen Lasten (z.B. einigen Tonnen) kann es sehr aufwändig sein, eine Vielzahl unterschiedlicher Referenzbelastungen bereitstellen zu können. Mit dem erfindungsgemäßen Funktionsmodell hat es sich gezeigt, dass manchmal einige wenige unterschiedliche Referenzbelastungen und die Null-Belastung genügen, um das Funktionsmodell zuverlässig anzulernen.

Die Auswerteeinrichtung kann einen Tiefpassfilter zum Filtern eines Temperaturwertes aufweisen, insbesondere eines Temperaturwertes eines Messkörpers einer Wägezelle.

Durch das Filtern mit dem Tiefpassfilter entspricht der gefilterte Wert einem verzögerten Temperaturwert. Dieser verzögerte Temperaturwert entspricht manchmal besser der tatsächlichen Temperatur eines Körpers als die gemessene Temperatur, insbesondere, wenn er eine deutlich größere Wärmekapazität als der Temperatursensor hat. Dieser gefilterte Temperaturwert kann bspw. als Temperaturwert für einen Messkörper einer Wägezelle verwendet werden.

Dieser mit dem Tiefpassfilter gefilterte Temperaturwert kann auch zum Berechnen eines Temperaturgradienten verwendet werden, wobei die Differenz zwischen dem tatsächlich gemessenen Temperaturwert und dem gefilterten Temperaturwert gebildet wird. Ein solcher Temperaturgradient hat z.B. Einfluss auf thermische Verspannungen eines Messkörpers.

Dies ist eine sehr einfache Möglichkeit, welche lediglich einen einzigen Temperatursensor benötigt, um einen Gradienten zu bestimmen.

Eine Auswerteeinrichtung und ein solches Verfahren zum Auswerten des Messsignals einer Wägezelle mit einem derart gefilterten Temperaturwert stellt einen eigenständigen Erfindungsgedanken dar, der auch unabhängig von dem digitalen Funktionsmodell genutzt werden kann, um insbesondere einen Gradienten zu bestimmen und/oder die Ausgabe einer Wägezelle zu korrigieren.

Nach einem weiteren Aspekt ist ein Wägeverfahren mit einer zentralen digitalen Messwertkorrektur vorgesehen, bei dem mit zumindest einer Wägezelle ein Gewichtsmesssignal erfasst wird, das über eine Signal- und/oder Datenleitung an eine zentrale Auswerteeinrichtung übermittelt wird, wobei die zentrale Auswerteeinrichtung mit einer Auswerteeinheit die mit der Wägevorrichtung gemessenen Kraft anhand des Gewichtsmesssignals bestimmt,
und die Auswerteeinrichtung das Gewichtsmesssignal in ein Gewichtssignal umsetzt, wobei ein digitales Funktionsmodell der Wägevorrichtung verwendet wird, um die Wägevorrichtung mit ihren Fehlerwirkungen zu simulieren und so die Fehler im Gewichtssignal zu kompensieren.

Durch das Simulieren der Wägevorrichtung mit ihren Fehlerwirkungen können die Fehlerwirkungen im ausgegebenen Gewichtssignal kompensiert werden. Dies erlaubt die Verwendung fehlerbehafteter einfacher Wägezellen bzw. einer fehlebehafteten einfachen Wägevorrichtung und trotzdem ist ein präzises Wiegen eines Wägegutes möglich.

Vorzugsweise ist das digitale Funktionsmodell vorab mit einer Lerneinrichtung während eines Lernprozesses angelernt worden, bei dem mittels einer oder mehrerer Referenzbelastungen Referenz-Messsignale erzeugt worden sind. Hierdurch kann eine Wägevorrichtung individuell erstellt werden und trotzdem lässt sich auf einfache Arte und Weise zuverlässig und präzise Wägegut wiegen. Dies erlaubt individuelle örtliche Rahmenbedingungen zu berücksichtigen und die Verwendung von Kraftaufnahmen in unterschiedlichster Form. Durch das Anlernen des digitalen Funktionsmodells an der Wägevorrichtung werden automatisch die durch die Konstruktion bedingten Fehler der Wägevorrichtung kompensiert. Die Kombination aus dem modular aufgebauten digitalen Funktionsmodell und dem Anlernen erlaubt eine schnelle und einfache Realisierung individueller Wägevorrichtungen für unterschiedlichste Anwendungen.

Ein Kennlinienmodul des Funktionsmodells kann zur Simulation das Gewichtsmesssignal in das Gewichtssignal oder umgekehrt wandeln, wobei das Kennlinienmodul Kennlinienparameter aufweist, welche mittels des Lernprozesses vorab bestimmt werden können.

Da mit diesem Verfahren die Kennlinie selbst angelernt wird, ist die Kennlinie einer Wägezelle selbst unbeachtlich. Vielmehr wird die Kennlinie der gesamten Wägevorrichtung angelernt, womit der Einfluss der weiteren Komponenten der Wägevorrichtung, wie z.B. Kraftaufnahme, Messkörper, etc. automatisch mitberücksichtigt werden.

Das Anlernen erfolgt vorzugsweise mit einem Optimierungsverfahren, insbesondere einem iterativen Optimierungsverfahren, in dem die einzelnen Parameter schrittweise optimiert werden.

Ein oder mehrere Fehlersimulationsmodule des digitalen Funktionsmodells der Wägevorrichtung können jeweils zumindest einen bestimmten Messfehler der Wägevorrichtung simulieren, und jedes Fehlersimulationsmodul kann hierzu einen oder mehrere Modellparameter verwenden, welche mittels des Lernprozesseses vorab bestimmt worden sind.

Die einzelnen Aspekte können unabhängig oder auch in Kombination angewandt werden.

Die Erfindung wird nachfolgend beispielhaft näher anhand der Zeichnungen erläutert. Die Zeichnungen zeigen in:

Figur 1    einen Teil einer Behälterwaage bei einem Hochofen mit einer Direktwägetechnik,
Figur 2    schematisch den Aufbau einer Wägevorrichtung in einem Blockschaltbild,
Figur 3    ein Auswertemodul zum Auswerten der Messsignale, das ein digitales Funktionsmodell aufweist, in einem Blockschaltbild,
Figur 4    das digitale Funktionsmodell aus Figur 3 mit einem Kennlinienmodul und mehreren Fehlersimulationsmodulen in einem Blockschaltbild,
Figur 5    einen Teil einer Schienenwage in einer schematischen Darstellung, und

Figur 6    einen Teil einer Drehgestellwaage mit einem Referenzsystem.

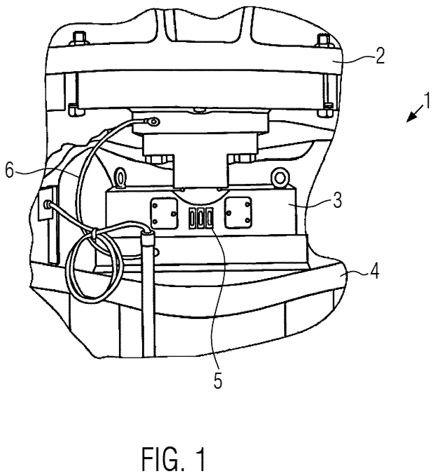

Ein erstes Ausführungsbeispiel einer erfindungsgemäßen Wägevorrichtung ist eine Gichtbunkerwaage bei einem Hochofen (Fig. 1).

Die Wägevorrichtung weist als Kraftaufnahme einen Behälter 2 zum Aufnehmen einer flüssigen Schmelze auf. Die Wägevorrichtung 1 weist drei Wägezellen 3 auf. Eine jede der drei Wägezellen 3 ist zwischen dem Behälter 2 und einer Grundplatte 4 angeordnet. Der Behälter 2 wird ausschließlich von den Wägezellen 3 unterstützt, so dass kein Kraftschluss parallel zu den Wägezellen 3 auftreten kann. Die Grundplatte 4, welche den Untergrund bildet, wird auch als Anschlussstruktur bezeichnet.

Die Wägezellen 3 sind starr mit dem Behälter 2 verbunden. Im vorliegenden Ausführungsbeispiel sind sie an den Behälter 2 geschraubt. Oftmals werden bei Wägevorrichtungen Elastomerlager zum Koppeln der jeweiligen Wägezelle an die Kraftaufnahme verwendet, um Störkräfte zu entkoppeln und um sicherzustellen, dass der Kraftfluss von der Kraftaufnahme in die Wägezelle 3 nur in der gewünschten Richtung erfolgt. Solche Elastomerlager sind wartungsintensiv. Zudem sind derartige Elastomerlager hitzeempfindlich und es ist daher schwierig, diese bei einer Wägevorrichtung für Schmelze aus einem Hochofen zu verwenden. Die starre Anbindung ist wesentlich wartungsärmer als eine Kopplung mittels Elastomerlager. Jedoch hat die starre Verbindung zwischen den Wägezellen 3 und dem Behälter 2 den Nachteil, dass auch Störkräfte auf die Wägezellen 3 übertragen werden, die die Messung beeinträchtigen können.

Die einzelnen Wägezellen 3 weisen als Sensoren Dehnungsmessstreifen (DMS) 5 auf. Die Dehnungsmessstreifen können beispielsweise in einer Wheatstone'schen Brücke geschaltet sein.

Die einzelnen Wägezellen 3 weisen eine Ausleseeinrichtung mit einem A/D-Wandler auf, so dass ein digitales Messsignal ausgegeben wird.

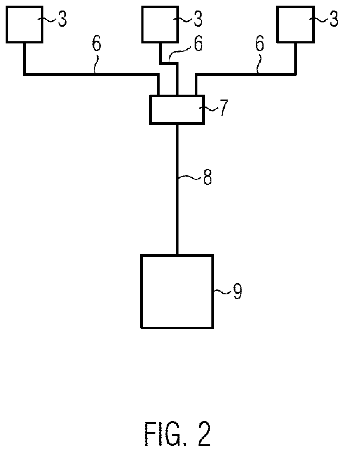

Die Wägezellen 3 sind jeweils mit einer Datenleitung 6 mit einer Messsignal-Sammelstation 7 verbunden (Fig. 2). An der Messsignal-Sammelstation 7 werden Messsignale der einzelnen Wägezellen 3 eingelesen und miteinander kombiniert. Im vorliegenden Ausführungsbeispiel werden die Messsignale der drei Wägezellen 3 addiert, da die Messanordnung so ausgebildet ist, dass alle drei Wägezellen grundsätzlich den gleichen Anteil der Last messen. Es kann jedoch sein, dass die Hebelverhältnisse, mit welchen die Last an der jeweiligen Wägezelle angreift, sich unterscheiden, so dass die Messsignale der einzelnen Wägezellen mit einem Faktor multipliziert werden müssen, um ein korrektes Gesamtsignal zu erzeugen.

Das von der Messsignal-Sammelstation 7 erzeugte Messsignal $S_m(t)$ wird über eine weitere Datenleitung 8 an eine zentrale Auswerteeinrichtung 9 übermittelt.

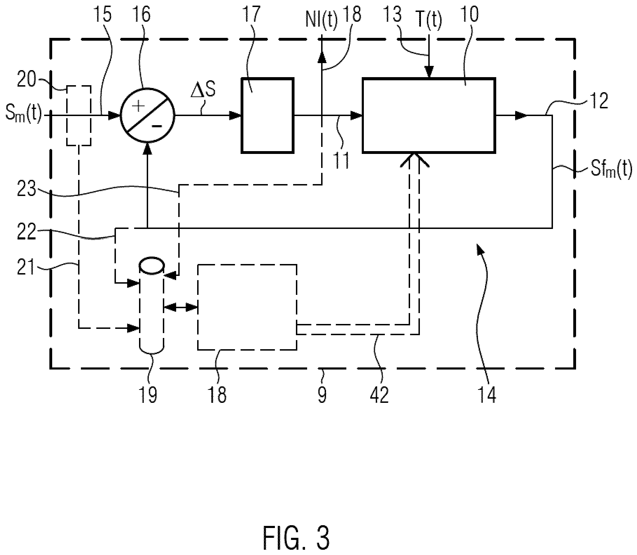

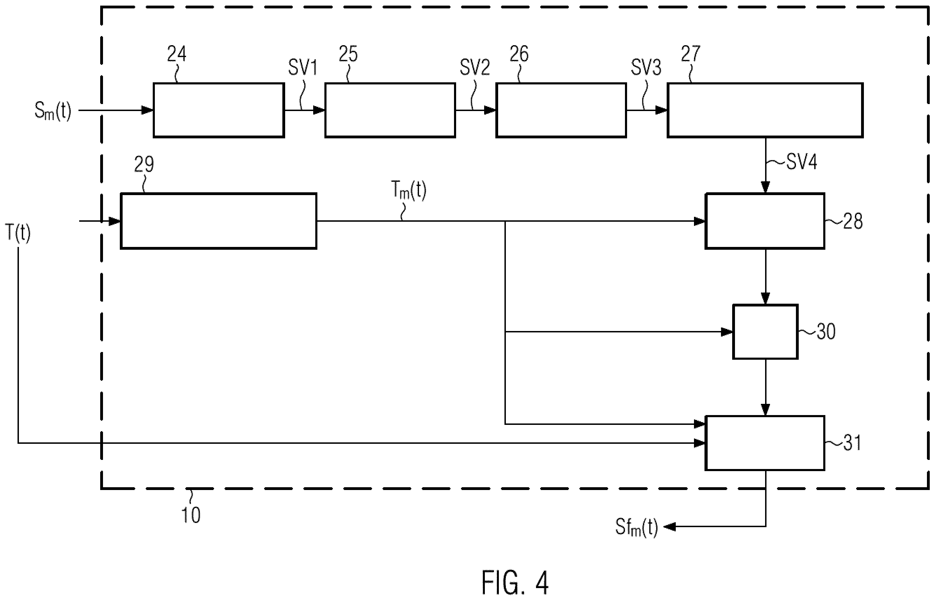

Die zentrale Auswerteeinrichtung 9 weist ein digitales Funktionsmodell 10 der Wägevorrichtung 1 auf (Fig. 3, 4). An einem Eingang 11 des digitalen Funktionsmodells liegt ein Signal an, das das von der Wägevorrichtung 1 gemessene Gewicht M(t) beschreibt. An einem Ausgang 12 des digitalen Funktionsmodells 10 wird ein Signal ausgegeben, das ein simuliertes Messsignal $sf_m(t)$ wiedergibt, wobei im vorliegenden Ausführungsbeispiel wird das simulierte Messsignal derart abgeändert, dass die Fehler der Wägevorrichtung 1 simuliert werden, so dass das simulierte Messsignal ein fehlerbehaftetes Messsignal $sf_m(t)$ ist.

Das Funktionsmodell 10 stellt eine digitale Simulation der Wägevorrichtung 1 dar, wobei beim Anlegen eines vorbestimmten Gewichtes M(t) das simulierte Messsignal $sf_m(t)$ ausgegeben wird.

Optional kann das digitale Funktionsmodell 10 einen oder mehrere Eingänge für Störgrößen aufweisen, welche bei der Simulation des Messsignals berücksichtigt werden. Im vorliegenden Ausführungsbeispiel (Figur 3) wird ein Signal, das die Temperatur T(t) bei den Wägezellen 3 wiedergibt, als Störgröße in das digitale Funktionsmodell 10 angegeben.

Das digitale Funktionsmodell 10 ist Bestandteil einer Auswerteschleife 14, welche einen Eingang 15 zum Entgegennehmen des Messsignals $s_m(t)$ von der Messsignal-Sammelstation 7 aufweist. Der Eingang 15 ist mit einem Komparator 16 verbunden. Der Komparator 16 ist weiterhin mit dem Ausgang 12 des digitalen Funktionsmodells 10 verbunden und berechnet die Differenz zwischen dem gemessenen Messsignal $s_m(t)$ und den vom Funktionsmodell 10 ausgegebenen simulierten fehlerbehafteten Messsignal $sf_m(t)$. Der Komparator 16 gibt ein Differenzsignal $\Delta s$ aus, das an einen nachgeschalteten Integrator 17 weitergeleitet wird. Der Integrator 17 integriert das Differenzsignal $\Delta s$ und gibt das Gewichtssignal M(t) aus. Der Ausgang des Integrators 17 ist mit dem Eingang 11 des digitalen Funktionsmodells 10 verbunden. Weiterhin ist ein Ausgang 18 an der Verbindung zwischen dem Integrator 17 und dem digitalen Funktionsmodell 10 vorgesehen, der aus der zentralen Auswerteeinrichtung 9 herausführt und an dem das das Gewicht M(t) beschreibende Signal ausgegeben wird.

Das digitale Funktionsmodell 10 ist, wie es unten näher erläutert wird, derart ausgebildet, dass auf Grundlage des am Eingang anliegenden Gewichtssignals M(t) das fehlerbehaftete Messsignal $sf_m(t)$ erzeugt wird. Mit dem digitalen Funktionsmodell 10 werden somit die systematischen Fehler der Wägevorrichtung 1 simuliert.

Solange eine Differenz zwischen dem gemessenen Messsignal $s_m(t)$ und dem simulierten fehlerbehafteten Messsignal $sf_m(t)$ besteht, weicht das Differenzsignal $\Delta s$ von Null ab und durch das Integrieren mittels des Integrators 17 steigt oder fällt der Wert des Gewichtssignals M(t) je nach Vorzeichen des Differenzsignals $\Delta s$. Stimmt das gemessene Messsignal $s_m(t)$ mit dem simulierten fehlerbehafteten Messsignal $sf_m(t)$ überein, dann ist das Differenzsignal $\Delta s$ gleich

Null, womit das Gewichtssignal M(t) am Ausgang des Integrators 17 stabil ist. Dieses Gewichtssignal M(t) entspricht dem tatsächlich mit der Wägevorrichtung 1 gemessenen Gewichtes und wird am Ausgang 18 als Gewichtswert ausgegeben.

Die zentrale Auswerteeinrichtung 9 weist weiterhin eine Lerneinrichtung auf, die im vorliegenden Ausführungsbeispiel aus einem Optimierungsmodul 18, einem Datenlogger 19 und einem Zweigstellenmodul 20 besteht (Fig. 3). Das Zweigstellenmodul 20 ist am Eingang 15 der zentralen Auswerteeinrichtung 9 angeordnet und kann das gemessene Messsignal $s_m(t)$ abzweigen und mit einer Datenleitung 21 dem Datenlogger 19 zuführen, in dem die gemessenen Messsignale $s_m(t)$ gespeichert werden. Der Datenlogger 19 ist mit weiteren Datenleitungen 22 und 23 mit dem Ausgang 12 des Funktionsmodells 10 und mit dem Eingang 11 des Funktionsmodells 10 verbunden, um das simulierte fehlerbehaftete Messsignal $sf_m(t)$ und das Gewichtssignal M(t) einzulesen.

Werden Störgrößen erfasst, so werden diese Störgrößen auch synchron mit den Referenzmesssignalen und Gewichtssignalen eingelesen und im Datenlogger 19 abgespeichert.

Weiterhin weist das Optimierungsmodul eine Datenleitung 42 zum digitalen Funktionsmodell 10 auf, um mit einem Optimierungsverfahren ermittelte Parameter an das digitale Funktionsmodell 10 zu übermitteln.

Das digitale Funktionsmodell 10 weist ein Kennlinienmodul 24 auf, das unmittelbar am Eingang 11 des digitalen Funktionsmodells angeordnet ist (Fig. 4). Das Kennlinienmodul setzt mit einer vorbestimmten Kennlinie, die der Kennlinie der Wägevorrichtung 1 entspricht, das Gewichtssignal M(t) in ein vorläufiges erstes Messsignal sv1(t) um. Die Kennlinie wird mittels folgender kubischer Funktion approximiert:

$$Sv1 = Pl * s_m(t) + Pq * (s_m(t))^2 + Pc * (s_m(t))^3$$

Diese Funktion weist einen linearen Parameter Pl, einen quadratischen Parameter Pq und einen kubischen Parameter Pc auf. Mit dieser Funktion wird somit der Gewichtswert in ein Messsignal sv1 umgesetzt, das ein fiktives, im Wesentlichen fehlerfreies Messsignal der Wägevorrichtung 1 ist.

Die Kennlinie wird somit durch eine nicht-lineare Funktion approximiert. Hierdurch werden Nichtlinearitäten der realen Kennlinie korrigiert.

Dem Kennlinienmodul 24 ist ein Fehlersimulationsmodul 25 zum Korrigieren des Kriechens eines Messkörpers nachgeschaltet. In den Wägezellen 3 sind die Dehnungsmessstreifen 5 an einem Messkörper befestigt, der sich unter einer Belastung verformt. Die Verformung des Messkörpers wird mittels der Dehnungsmessstreifen 5 gemessen. Hält die Belastung am Messkörper über längere Zeit an, dann verformt sich der Messkörper zunehmend. Dies wird als Kriechen bezeichnet. Das Kriechen wird mit einem Tiefpassfilter simuliert. Zum Berechnen der Auswirkung des Kriechens auf das vorläufige Messsignal sv1 wird eine Zeitkonstante $P_{tau-kriech-mess}$ für das Kriechen des Messkörpers benötigt. Die Zeitkonstante für das Kriechen $P_{tau-kriech-mess}$ ist mittels eines Optimierungsverfahrens zu bestimmen.

Mit dem Fehlersimulationsmodul 25 für das Kriechen wird das erste vorläufige Signal sv1 in ein zweites vorläufiges Signal sv2 umgesetzt, wobei das Messsignal entsprechend dem Kriecheffekt an der Wägevorrichtung 1 verändert wird. Das zweite vorläufige Messsignal sv2 ist somit entsprechend verändert worden, wie es in der Wägevorrichtung 1 durch das Kriechen stattfindet.

Das zweite vorläufige Messsignal sv2 wird einem Fehlersimulationsmodul 26 zum Korrigieren einer Hysterese zugeführt. Im vorliegenden Ausführungsbeispiel wird der Hysterese-Effekt mittels eines Modells simuliert. In der Literatur sind unterschiedliche Modelle zum Simulieren einer Hysterese bekannt, wie z.B.

das Dipolmodell (Ähnlichkeit zu magnetischen Dipolen; KÖNIG, Hans Günter. EIGENSCHAFTEN METALLISCHER MESSKÖRPER FÜR DIE WINDKANALMESSTECHNIK. Dissertation; Technische Hochschule Darmstadt, 06/1992),

das Preisach-Modell (Summe von elementaren Hystereseoperatoren; F. Preisach: Über die magnetische Nachwirkung. In: Zeitschrift für Physik. Band 94, 1935, S. 277-302), das Dahl-Modell (P.R. Dahl Solid friction damping of mechanical vibrations AIAA J., 14 (12) (1976), pp. 1675-1682),

das Masing-Modell (Parallelschaltung von elementaren idealen elastisch-plastischen Elementen; GUTZER, Ulrich; DYNAMISCHE IDENTIFIKATION STATISCHER HYSTERESE AM BEISPIEL EINES LEITERSEILS; Dissertation; Technische Universität Darmstadt, 01/1998),

das Ähnlichkeitsmodell (rein mathematisches Modell basierend auf die Annahme, dass innere Hystereseschleifen ähnlich zur Einhüllenden verlaufen; KOLSCH, H. SCHWINGUNGSDÄMPFUNG DURCH STATISCHE HYSTERESE. Reihe 11: Schwingungstechnik; Band 190. Fortschrittberichte VDI; VDI-Verlag, 1993), oder

das Lu-Gre-Modell (Slip-stick-basierend Reibungsmodell; Karl Johan Äström, C. Canudas de Wit Revisiting the LuGre Friction Model; Stick-slip motion and rate dependence IEEE Control Systems Magazine, 28 (6) (2008), pp. 101-114).

Bei der Berechnung des Hysterese-Effekts sind bspw. folgende mittels des Optimierungsverfahrens zu ermittelnden Parameter zu berücksichtigen:

- P_hyst - Kraft ab der ein fiktives Reibelement gleitet;
- P_sigma - Federkonstante, einer Feder, welche am fiktiven Reibelement angreift;
- P_alpha, P_beta - Parameter, die die Abweichung von einem linearen Verlauf der Kennlinie definieren.

Die Zusammenstellung der Parameter kann je nach Modell variieren.

Das Fehlersimulationsmodul 26 zur Hysterese verändert das vorläufige zweite Messsignal sv2 zu einem vorläufigen dritten Messsignal sv3 entsprechend dem bei der Wägevorrichtung 1 auftretenden Hysterese-Effekt.

Dem Fehlersimulationsmodul 26 für die Hysterese ist ein Fehlersimulationsmodul 27 für das Kriechen der Dehnungsmessstreifen 5 nachgeordnet. Das Kriechen der Dehnungsmessstreifen wird durch einen Tiefpassfilter in Kombination mit einem Korrekturterm, der proportional zur Ableitung nach der Zeit t ist, simuliert. Für die Berechnung werden als ein mit dem Optimierungsverfahren zu ermittelnder Parameter $P_{tau\ kriechDMS}$ für die Zeitkonstante des Kriechens der Dehnungsmessstreifen sowie ein Parameter $P_{kriechDMS}$, der ein kurzzeitiges Überschießen des Messsignals beim Kriechen des Dehnungsmessstreifen beschreibt, benötigt. Mit dem Fehlersimulationsmodul 27 für das Kriechen der Dehnungsmessstreifen 5 wird ein viertes vorläufiges Messsignal sv4 erzeugt.

Das vierte vorläufige Messsignal sv4 wird einem Fehlersimulationsmodul 28 für eine Nullpunkt-Korrektur zugeführt. Der Nullpunkt ist temperaturabhängig. Am Eingang 13 des digitalen Funktionsmodells 10 liegt das zeitlich veränderbare Temperatursignal T(t) an. Erfahrungsgemäß ändert sich der Temperaturwert der Temperatursensoren schneller als der Temperaturwert des Messkörpers der Wägezelle 3. Für die Änderung des Nullpunktes ist jedoch die Temperatur des Messkörpers relevant. Deshalb wird das Temperatursignal T(t) zunächst mit einem Tiefpassfilter 29 gefiltert, was einen verzögerten Temperaturwert Tm(t)ergibt, der der Temperatur des Messkörpers entspricht.

Der Effekt auf das Messsignal aufgrund der Nullpunkt-Abweichung wird mit folgender Formel berechnet:

$$sv5 = sv4 + Ptk0 * (Tm(t)-Tref)),$$

wobei sv5 das fünfte vorläufige Messsignal, Tref eine Referenztemperatur, bei der keine Abweichung des Nullpunktes vorliegt, und Ptk0 ein mittels des Optimierungsverfahrens einzustellender Parameter ist, der die Änderung des Nullpunktes in Abhängigkeit der Abweichung der Temperatur von der Referenztemperatur beschreibt.

Die Messempfindlichkeit der Dehnungsmessstreifen 5 ist temperaturabhängig, weshalb mittels eines Fehlersimulationsmoduls 30 für die Änderung der Empfindlichkeit der Dehnungsmessstreifen das fünfte vorläufige Messsignal sv5 zu einem sechsten vorläufigen Messsignal sv6 korrigiert wird. Diese Korrektur erfolgt mit folgender Formel:

$$Sv6 = sv5 * (1+PtkC * (Tm(t)-Tref)),$$

wobei der mittels des Optimierungsverfahrens zu bestimmende Parameter PtkC die temperaturabhängige Empfindlichkeit der Dehnungsmessstreifen darstellt.

Ein Temperaturgradient führt am Messkörper zu thermischen Spannungen. Die thermischen Spannungen führen zu Verformungen des Messkörpers, welche von den Dehnungsmessstreifen 5 erfasst werden und einen systematischen Messfehler verursachen. Deshalb wird das sechste vorläufige Messsignal sv6 einem weiteren Fehlersimulationsmodul 31 zur Korrektur des Einflusses aufgrund des Temperaturgradienten zugeführt. Bei diesem Fehlersimulationsmodul 31 wird neben dem "verzögerten" Temperaturwert des Messkörpers Tm(t) auch der tatsächlich mit dem Temperatursensor gemessene Temperaturwert T(t) berücksichtigt und die Temperaturdifferenz dieser beiden Temperaturwerte berechnet. Dieser Temperaturreferenzwert wird mit einem Korrekturparameter Pgradient multipliziert und gemäß folgender Formel zum sechsten vorläufigen Messsignal sv6 addiert, womit das fehlerbehaftete Messsignal $s_{fm}(t)$ berechnet ist:

$$s_{fm}(t) = sv6 + (T(t)-Tm(t)) * Pgradient,$$

womit das am Ausgang des digitalen Funktionsmodells 10 ausgegebene fehlerbehaftete Messsignal erzeugt ist. Die Bestimmung des Gradientenwertes mittels des Tiefpassfilters 29 ist bei Wägevorrichtungen möglich, bei welchen der Wärmefluss immer gleichgerichtet ist. Gibt es einen Wärmefluss in unterschiedlichen Richtungen, dann ist es zweckmäßig zwei oder mehrere Temperatursensoren zu verwenden, um hiermit auch die Richtung(en) des Wärmeflusses bestimmen zu können.

Bei der in Figur 1 gezeigten Wägevorrichtung, mit welcher Metallschmelze an einem Hochofen gewogen wird, gibt es immer einen Wärmefluss in eine Richtung. Bei dieser Wägevorrichtung wird das Funktionsmodell mit allen Fehlersimulationsmodulen 25 - 31 verwendet.

Damit das digitale Funktionsmodell 10 die Wägevorrichtung 1 korrekt wiedergibt, muss es angelernt werden Hierzu wird die Wägevorrichtung mit einem Referenzsignal beaufschlagt. Das Referenzsignal kann beispielsweise durch Auflegen eines Kalibrierkörpers mit einem vorbestimmten Gewicht erzeugt werden. Das Kalibriersignal kann jedoch auch mittels einer mechanischen Krafterzeugungseinrichtung, wie zum Beispiel einem Druckstempel und einer Referenz-Wägezelle, die an die Wägevorrichtung angelegt wird, wobei die Referenz-Wägezelle eine hochpräzise Wägezelle zum Messen des Referenzsignals ist.

Bei einer Wägevorrichtung, wie sie in Figur 1 gezeigt ist, mit welcher große Mengen an heißer Schmelze gewogen werden sollen, ist es zweckmäßig als Referenzgewichte eine oder mehrere Referenzpfannen mit jeweils einem vorbestimmten Gewicht zu verwenden.

Zentraler Bestandteil der Lerneinrichtung ist das Optimierungsmodul 18, das mittels des Zweigstellenmoduls 20 und dem Datenlogger 19 die Referenzmesssignale empfangen und im Datenlogger 19 zwischenspeichern kann und gleichzeitig die von der Auswerteschleife 14 erzeugten Gewichtssignale M(t) erfasst.

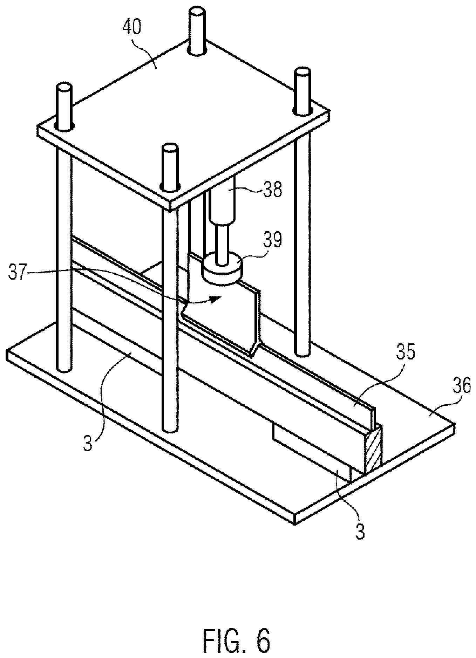

Bei einem Lernverfahren werden zunächst Referenzmesssignale $s_{m-ref}(t)$ mittels eines oder mehrerer Referenzgewichte oder einer Referenzeinrichtung, wie sie z.B. in Figur 6 gezeigt ist, erzeugt. Die Referenzmesssignale, die Referenzgewichte und ggfs. die Störgrößen werden im Datenlogger 19 gespeichert.

Mit einem Optimierungsverfahren werden am digitalen Funktionsmodell 10 die einzelnen Parameter P variiert, so dass das/die Referenzgewichte am Eingang 11 des Funktionsmodells 10 angelegt und das hierauf simulierte fehlerbehaftete Messsignal $sf_m(t)$ möglichst in Einklang mit den erfassten gespeicherten Referenzmesssignalen $s_{m-ref}(t)$ gebracht wird.

Hierdurch kann während des Lernprozesses die Abweichung bzw. der Fehler der simulierten fehlerbehafteten Messsignale $sf_m(t)$ minimiert werden.

Mit einem derart optimierten digitalen Funktionsmodell 10 kann mit der Auswerteschleife 14 ein Gewichtssignal M(t) aus dem Gewichtsmesssignal $s_m(t)$ erzeugt werden, das bzgl. der von den einzelnen Fehlersimulationsmodulen simulierten Fehler korrigiert ist. Die Fehlersimulationsmodule könnten deshalb auch als Korrekturmodule bezeichnet werden.

Es gibt unterschiedliche Optimierungsverfahren, mit welchen der Fehler minimiert werden kann. Im vorliegenden Ausführungsbeispiel wurde als Optimierungsverfahren eine Partikelschwarmoptimierung (PSO) in Kombination mit dem Levenberg-Marquardt-Algorithmus angewandt, das ein numerisches Optimierungsverfahren zur Lösung nicht-linearer Ausgleichs-Probleme mit Hilfe der Methode der kleinsten Quadrate ist.

Weiterhin bieten sich als Optimierungsverfahren Gradienten-basierte Verfahren an. Prinzipiell können aber auch nicht-Gradienten-basierte Verfahren zum Einsatz kommen. Zu den Gradienten-basierten Verfahren gehören das Gradienten-Abstiegsverfahren, das Gradienten-Abstiegsverfahren mit Nebenbedingungen oder das quasi-Newton-Verfahren. Sie erfordern lediglich ein kleines Auslenken der Steuerparameter der Wägevorrichtung um ihren Betriebszustand.

Gradienten-basierte Verfahren haben den Vorteil, dass sie für die Umgebung des Betriebszustandes ein sehr präzises Modell des jeweiligen Systems bereitstellen, das einfach und schnell mit einer Auslenkung eines Steuerparameters ermittelt werden kann.

Nicht-Gradienten-basierte Verfahren sind zum Beispiel das Simplex-Nelder-Mead-Verfahren oder das Verfahren der differenziellen Evolution. Eine Übersicht verschiedener Optimierungsmethoden ist zum Beispiel in dem Lehrbuch Optimierung von Florian Jarre und Josef Stör (DOI 10.1007/978-3-642-18785-8) gegeben.

Unabhängig davon, ob das Optimierungsverfahren ein Gradienten-basierte Verfahren oder ein Nicht-Gradienten-basierte Verfahren ist, isst es in der Regel meistens ein iteratives Optimierungsverfahren, das die Parameter schrittweise optimiert.

Wird das Referenzsignal mit einem Druckzylinder erzeugt und mit einer Referenzwägezelle abgenommen, dann kann das Lernverfahren vollautomatisch ausgeführt werden. Werden jedoch manuell unterschiedliche Referenzgewichte aufgelegt, dann ist das Lernverfahren halbautomatisch durchzuführen und an geeigneter Stelle an der zentralen Auswerteeinrichtung 9 jeweils das anliegende Referenzgewicht einzugeben.

Das in Figur 4 gezeigte digitale Funktionsmodell 10 ist spezifisch auf eine Wägevorrichtung ausgebildet. Grundsätzlich bestünde die Möglichkeit anstelle eines solchen spezifischen Modells ein allgemeines Modell zu verwenden, das beispielsweise durch ein neuronales Netzwerk dargestellt wird. Die Verwendung eines solchen spezifischen Modells benötigt jedoch wesentlich weniger Referenzwerte beim Lernen, wodurch das Lernen wesentlich einfacher und schneller erfolgen kann. In einzelnen Fällen kann es sogar genügen, lediglich die Null-Belastung und eine weitere Referenzbelastung beim Lernen anzulegen, um das digitale Funktionsmodell 10 vollständig zu trainieren.

Beim Lernen werden vorzugsweise synchron alle Messwerte, die entsprechenden Störgrößen und die Referenzbelastungen erfasst und abgespeichert, um für das Optimierungsverfahren zur Verfügung zu stehen.

Bei obigem Ausführungsbeispiel ist die Lerneinrichtung 18, 19, 20 in der zentralen Auswerteeinrichtung 9 integriert. Grundsätzlich ist es auch möglich, beim Lernprozess zunächst alle Referenzdaten zu erfassen und die Optimierung an einer von der zentralen Auswerteeinrichtung unabhängigen Vorrichtung auszuführen, an welcher eine Kopie der Auswerteschleife 14 vorgehalten wird.

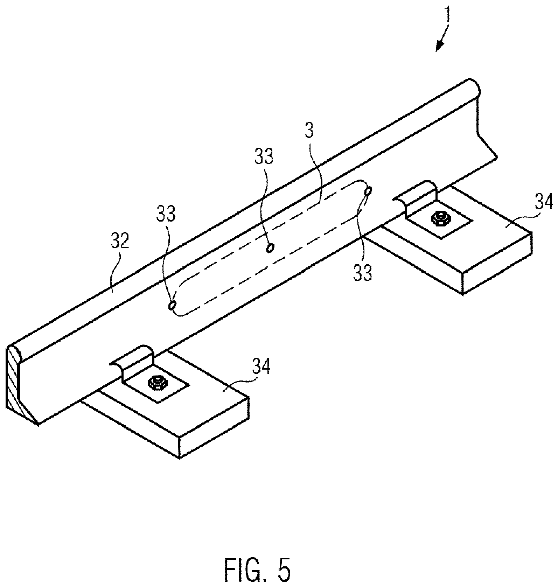

Ein zweites Ausführungsbeispiel einer Wägevorrichtung 1 ist eine Gleiswaage, welche mehrere Wägezellen 3 entlang zweier Schienen 32 eines Zuggleises aufweist. Figur 5 zeigt schematisch lediglich einen Ausschnitt einer einzelnen Schiene 32 mit einer schematischen Darstellung der Wägezelle 3. Die Wägezelle 3 weist drei Dehnungsmessstreifen 33 auf, die mit dem Gleis verklebt sind, wobei sich die Wägezelle 3 im Bereich zwischen zwei Schwellen 34 befindet. Eine solche Wägezelle 3 kann auch mehr als drei Dehnungsmessstreifen 33 aufweisen. Wird die Schiene 32 im Bereich der Wägezelle 3 belastet, dann verbiegt sich die Schiene 32 und diese Verbiegung wird mittels der Wägezelle 3 erfasst. Die Schiene 32 dient somit als Messkörper. Diese Wägevorrichtung 1 kann eine Vielzahl von Wägezellen 3 entlang zweier Schienen 32 eines Gleises umfassen, die beispielsweise über eine Strecke von 20 - 50 m in regelmäßigen Abständen an den Schienen 32 befestigt sind. Hierdurch kann beim langsamen Abfahren des Gleises das Gewicht eines darauf befindlichen Waggons erfasst werden. Hierbei werden mehrere Gruppen von Wägezellen 3, die eng beieinander liegend angeordnet sind, jeweils mit einer zentralen Auswerteeinrichtung 9 verbunden, so dass die einzelnen Gruppen von Wägezellen 3 unabhängig voneinander erfasst und ausgewertet werden.

Für diese Gleiswaage kann im Wesentlichen das gleiche Funktionsmodell des obigen Ausführungsbeispiels, das in Figur 4 gezeigt ist, verwendet werden. Jedoch sind bei dieser Gleiswaage die thermischen Einflüsse nicht eindeutig ausgerichtet, so dass es zweckmäßig ist, zwei oder mehrere Temperatursensoren vorzusehen, so dass Temperaturgradienten in eine oder mehrere Richtungen eindeutig erfasst werden können.

Ein weiteres Ausführungsbeispiel ist eine Wägevorrichtung 1 für Drehgestelle von Zügen. In Figur 6 ist lediglich ein einzelner Abschnitt einer Schiene 35 gezeigt, welcher auf zwei Wägezellen 3 aufliegt. Die Wägezellen 3 sind wiederum auf einer Grundplatte 36 angeordnet. Es gibt keine weitere Verbindungzwischen der Schiene 35 und der Grundplatte 36, so dass es keinen Kraftnebenschluss zu den Wägezellen 3 gibt. Die Wägezellen 3 sind sowohl mit der Grundplatte 36 als auch mit der Schiene 35 starr verbunden, d.h., sie sind entweder verschraubt oder mit einer Presspassung miteinander verbunden.

Auf diese Wägevorrichtung 1 ist eine Referenzeinrichtung angeordnet, welche einen Druckstempel 37, einen Hydraulikzylinder 38 und eine Referenzwägezelle 39 umfasst. Die Referenzwägezelle 39 ist mittels Elastomerlager mit dem Druckstempel 37 und dem Hydraulikzylinder 38 gekoppelt. Der Hydraulikzylinder 38 ist an seinem oberen Ende an eine Stützplatte 40 befestigt, welche mit Stützstangen 41 mit der Grundplatte 36 verbunden ist.

Durch Betätigung des Hydraulikzylinders 38 kann auf den Druckstempel 37 eine Kraft ausgeübt werden, welche auf die Schiene 35 übertragen und somit von den Wägezellen 3 detektiert wird. Die Referenzwägezelle 39 misst exakt die vom Hydraulikzylinder 38 ausgeübte Kraft und erzeugt ein Referenzsignal.

Mit dieser Referenzeinrichtung können automatisch eine Folge unterschiedlicher Referenzsignale erzeugt, erfasst und zum Optimieren eines digitalen Funktionsmodells 10 verwendet werden.

Nach dem Lernen der Paramater des digitalen Funktionsmodells wird die Referenzeinrichtung entfernt und die Wägevorrichtung kann zum Wiegen der Drehgestelle verwendet werden.

Derartige Wägevorrichtungen für Drehgestelle sind üblicherweise in Hallen angeordnet, in welchen definierte Temperaturverhältnisse vorliegen. Diese Wägevorrichtung unterliegt somit keinen oder vernachlässigbaren Temperaturschwankungen.

Es hat sich gezeigt, dass diese Wägevorrichtung 1 sehr gut mit einem digitalen Funktionsmodell 10 simuliert werden kann, das lediglich das Kennlinienmodul 24 und das Fehlersimulationsmodul 26 zum Korrigieren des Hysterese-Effektes aufweist. Alle anderen Fehlersimulationsmodule, welche bei dem in Figur 4 gezeigten Ausführungsbeispiel vorhanden sind, können weggelassen werden.

Mit dem Kennlinienmodul, das mit einer kubischen Funktion die Kennlinie approximiert, wird einerseits die Umsetzung des Gewichtssignals in ein Messsignal bewirkt und andererseits eine Nicht-Linearität der Kennlinie kompensiert.

Mit dem Fehlersimulationsmodul 26 für einen Hysterese-Effekt werden die Hysterese-Effekte, die bei dieser Wägevorrichtung 1 auftreten, sehr gut kompensiert.

Dieses Beispiel zeigt, dass nicht immer alle Fehlersimulationsmodule des digitalen Funktionsmodells 10 aus Figur 4 zur Simulation einer Wägevorrichtung notwendig sind. Je nachdem, welche Fehlerursachen bei einer Wägevorrichtung vorherrschen, können die entsprechenden Fehlersimulationsmodule gewählt werden.

In einer bevorzugten Ausführungsform sind die einzelnen Fehlersimulationsmodule 25 - 31 individuell zuschaltbar.

Mit einer Referenzeinrichtung, wie sie in Figur 6 gezeigt ist, mit welcher automatisch der Lernprozess ausgeführt werden kann, kann auch mit einer unterschiedlichen Kombination von Fehlersimulationsmodulen das digitale Funktionsmodell angelernt werden. Hiermit kann man feststellen, welche Fehlersimulationsmodule tatsächlich für die jeweilige Wägevorrichtung relevant sind, um den Fehler zu minimieren. Ergibt sich bspw., dass ein bestimmtes Fehlersimulationsmodul keine Verbesserung in der Minimierung des Fehlers bewirkt, dann bedeutet dies, dass der von diesem Fehlersimulationsmodul korrigierte Fehler an der entsprechenden Wägevorrichtung nicht auftritt.

Die Erfindung ist oben beispielhaft anhand mehrerer Beispiele erläutert worden, welche ein Funktionsmodell verwenden, das als Eingangssignal ein Gewichtssignal aufnimmt und als Ausgangssignal ein fehlerbehaftetes simuliertes Messsignal erzeugt. Durch die in Figur 3 gezeigte Auswerteschleife kann mit diesem Funktionsmodell und dem von der Wägevorrichtung 1 erzeugten Messsignal das tatsächliche, korrigierte Gewicht bestimmt werden.

Grundsätzlich ist es auch möglich, ein digitales Funktionsmodell vorzusehen, das als Eingang das gemessene Messsignal aufnimmt und als Ausgang einen korrigierten Gewichtswert ausgibt. Die einzelnen Module des digitalen Funktionsmodells gemäß Figur 4 sind dann entsprechend zu invertieren. Für einzelne Module ist eine solche Invertierung einfach, für andere kann es jedoch sehr aufwändig sein, weshalb das oben erläuterte nicht-invertierte digitale Funktionsmodell einfacher zu realisieren ist.

Die Erfindung kann folgendermaßen kurz zusammengefasst werden:

Die Erfindung betrifft eine Wägevorrichtung und ein Wägeverfahren mit einer zentralen digitalen Messwertkorrektur. Die Wägevorrichtung wird an einer zentralen Auswerteeinrichtung mit einem digitalen Funktionsmodell der Wägevorrichtung simuliert. Mit einer Lerneinrichtung kann das digitale Funktionsmodell der Wägevorrichtung angelernt werden, so dass Messfehler der Wägevorrichtung kompensiert werden.

Hierdurch kann man mit sehr einfach ausgebildeten Wägevorrichtungen zuverlässig und präzise wiegen.

Beim oben erläuterten Ausführungsbeispiel ist die Messsignalsammelstation 7 in der Nähe der Wägezellen 3 angeordnet. Die Messsignalsammelstation ist mit einer Datenleitung 8 mit der zentralen Auswerteeinrichtung 9 verbunden, welche wesentlich länger als die Datenleitungen zwischen den Wägezellen 3 und der Messsignalsammelstation 7 ist. Die Datenleitung 8 kann eine Länge von zumindest 10 m, insbesondere 20 m und insbesondere 30 m aufweisen.

Die Messsignalsammelstation 7 kann jedoch auch im Rahmen der Erfindung in die zentrale Auswerteeinrichtung 9 integriert sein.

Bezugszeichenliste

1 Wägevorrichtung
2 Behälter
3 Wägezelle
4 Grundplatte
5 Dehnungsmessstreifen
6 Datenleitung
7 Messsignal-Sammelstation
8 Datenleitung
9 Zentrale Auswerteeinrichtung
10 Digitales Funktionsmodell
11 Eingang Funktionsmodell
12 Ausgang Funktionsmodell
13 Eingang Funktionsmodell (Störgröße)
14 Auswerteschleife
15 Eingang der zentralen Auswerteeinrichtung
16 Komparator
17 Integrator
18 Optimierungsmodul
19 Datenlogger
20 Zweigstellenmodul
21 Datenleitung
22 Datenleitung
23 Datenleitung
24 Kennlinienmodul
25 Fehlersimulationsmodul Kriechen des Messkörpers
26 Fehlersimulationsmodul Hysterese
27 Fehlersimulationsmodul Kriechen der DMS
28 Fehlersimulationsmodul Null-Punkt-Korrektur
29 Tiefpassfilter
30 Fehlersimulationsmodul Empfindlichkeit

31 Fehlersimulationsmodul Einflusstemperaturgradient
32 Schiene
33 Befestigungspunkt
34 Schwelle
35 Schiene
36 Grundplatte
37 Druckstempel
38 Hydraulikzylinder
39 Referenzwägezelle
40 Stützplatte
41 Stützstange
42 Datenleitung

**Patentansprüche**

1. Wägevorrichtung (1) mit einer zentralen digitalen Messwertkorrektur,

   welche zumindest eine Wägezelle (3) umfasst, welche über eine Signal- und/oder Datenleitung (6,8) mit einer zentralen Auswerteeinrichtung (9) zum Übermitteln eines Gewichtsmesssignals verbunden ist, wobei die zentrale Auswerteeinrichtung eine Auswerteeinheit zum Bestimmen der mit der Wägevorrichtung gemessenen Kraft anhand des Gewichtsmesssignals aufweist,
   **dadurch gekennzeichnet, dass** die Auswerteeinheit ein digitales Funktionsmodell (10) der Wägevorrichtung umfasst, das ein oder mehrere Fehlersimulationsmodule aufweist, wobei ein jedes Fehlersimulationsmodul ein Modell der Wägevorrichtung darstellt, das zumindest einen bestimmten Messfehler der Wägevorrichtung simuliert, und jedes Fehlersimulationsmodul einen oder mehrere Modellparameter aufweist, mit welchen die Wägevorrichtung modelliert wird, wobei eine Lerneinrichtung vorgesehen ist, mit welcher die Modellparameter während eines Lernprozesses bestimmbar sind, bei dem mittels einer oder mehrerer Referenzbelastungen Referenz-Messsignale erzeugt werden, wobei das Funktionsmodell ein Kennlinienmodul (24) aufweist, das das Gewichtsmesssignal in ein Gewichtssignal oder umgekehrt wandelt und das Kennlinienmodul Kennlinienparameter aufweist, welche mittels der Lerneinrichtung während des Lernprozesses bestimmt werden.

2. Wägevorrichtung nach Anspruch 1,
   **dadurch gekennzeichnet,**
   **dass** das Kennlinienmodul zum Wandeln des Gewichtssignal in das Gewichtsmesssignal ausgebildet ist und die Fehlersimulationsmodule zum Simulieren des Gewichtssignals derart ausgebildet sind, dass sie das Gewichtsmesssignal um einen an der Wägevorrichtung auftretenden Fehler verändern.

3. Wägevorrichtung nach Anspruch 1 oder 2,
   **dadurch gekennzeichnet,**
   **dass** einzelne der mehreren Fehlersimulationsmodule ausschaltbar sind.

4. Wägevorrichtung nach einem der Ansprüche 1 bis 3,
   **dadurch gekennzeichnet,**
   **dass** die Wägevorrichtung mehrere Wägezellen aufweist, wobei die Signale der einzelnen Wägezellen zu dem Gewichtsmesssignal kombiniert werden.

5. Wägevorrichtung nach einem der Ansprüche 1 bis 4,
   **dadurch gekennzeichnet,**
   **dass** die Wägezelle(n) einen oder mehrere Dehnungsmesstreifen aufweist bzw. aufweisen.

6. Wägevorrichtung nach einem der Ansprüche 1 bis 5,
   **dadurch gekennzeichnet,**
   **dass** die Wägezellen mit starren Verbindungen in die Wägevorrichtung integriert sind.

7. Wägevorrichtung nach einem der Ansprüche 1 bis 6,
   **dadurch gekennzeichnet,**
   **dass** die Wägevorrichtung einen Temperatursensor aufweist, der zur Erfassung der Temperatur an oder in der Nähe zumindest einer der Wägezellen angeordnet ist.

8. Wägevorrichtung nach einem der Ansprüche 1 bis 7,
**dadurch gekennzeichnet,**
**dass** zumindest zwei oder mehrere Fehlersimulationsmodule zum Korrigieren jeweils eines der folgenden Fehlerursachen vorgesehen sind:

- Linearität;
- Kriechen (Kraftaufnahme, Wägezelle);
- Hysterese;
- thermische Abweichungen des Nullpunktes;
- Abweichungen des Nullpunktes bzgl. eines thermischen Gradienten;
- Abweichungen der Empfindlichkeit der Wägezellen aufgrund von Temperaturänderungen;
- Stöße;
- Position der Last;
- Querkräfte;
- Fehler durch Schrägstellung.

9. Wägevorrichtung nach Anspruch 8,
**dadurch gekennzeichnet,**
**dass** das Kennlinienmodul derart ausgebildet ist, dass es mit einer nichtlinearen Funktion die Kennlinie der Wägevorrichtung approximiert.

10. Wägeverfahren mit einer zentralen digitalen Messwertkorrektur, wobei

mit zumindest einer Wägezelle (3) ein Gewichtsmesssignal ($s_m(t)$)
erfasst wird, das über eine Signal- und/oder Datenleitung (6, 8) an eine zentrale Auswerteeinrichtung (9) übermittelt wird, wobei die zentrale Auswerteeinrichtung mit einer Auswerteeinheit die mit der Wägevorrichtung (1) gemessenen Kraft anhand des Gewichtsmesssignals bestimmt, wobei die Auswerteeinrichtung das Gewichtsmesssignal in ein Gewichtssignal umsetzt, **dadurch gekennzeichnet, dass** ein digitales Funktionsmodell (10) der Wägevorrichtung verwendet wird, um die Wägevorrichtung mit ihren Fehlerwirkungen zu simulieren und so die Fehler im Gewichtssignal zu kompensieren.

11. Wägeverfahren nach Anspruch 10,
**dadurch gekennzeichnet,**
**dass** das digitale Funktionsmodell vorab mit einer Lerneinrichtung während eines Lernprozesses angelernt worden ist, bei dem mittels einer oder mehrerer Referenzbelastungen Referenz-Messsignale erzeugt worden sind.

12. Wägeverfahren nach Anspruch 11,
**dadurch gekennzeichnet,**
**dass** der Lernprozess auf einem iterativen Optimierungsverfahren beruht.

13. Wägeverfahren nach einem der Ansprüche 10 bis 12,
**dadurch gekennzeichnet,**
**dass** ein Kennlinienmodul des Funktionsmodells zur Simulation das Gewichtsmesssignal in das Gewichtssignal oder umgekehrt wandelt und das Kennlinienmodul Kennlinienparameter aufweist, welche mittels des Lernprozesses vorab bestimmt worden sind.

14. Wägeverfahren nach einem der Ansprüche 10 bis 13,
**dadurch gekennzeichnet**,
ein oder mehrere Fehlersimulationsmodule des digitalen Funktionsmodells der Wägevorrichtung jeweils zumindest einen bestimmten Messfehler der Wägevorrichtung simulieren, und jedes Fehlersimulationsmodul hierzu einen oder mehrere Modellparameter verwendet, welche mittels der des Lernprozesses vorab bestimmt worden sind.

15. Verfahren nach einem der Ansprüche 10 bis 14,
**dadurch gekennzeichnet,**
**dass** eine Wägevorrichtung nach einem der Ansprüche 1 bis 9 verwendet wird.

**Claims**

1. Weighing device (1) with a central digital measured value correction,

which includes at least one load cell (3),
which is connected by a signal and / or data line (6,8) to a central analytical unit (9) for transmitting a weight measuring signal, wherein the central analytical unit has an analytical unit for determining the force measured with the weighing device on the basis of the weight measuring signal,
**characterized in that**
the analytical unit comprises a digital function simulator (10) of the weighing device comprising one or more error simulation modules, wherein each error simulation module represents a model of the weighing device simulating at least one specific error of measurement of the weighing device, and each error simulation module has one or more model parameters with which the weighing device is modelled, wherein a training device is provided with which the model parameters can be determined during a training process in which reference measuring signals are generated by means of one or more reference loads, wherein the function simulator has a characteristic curve module (24) that converts the weight measuring signal into a weight signal or vice versa, and the characteristic curve module has characteristic curve parameters which are determined by means of the training device during the training process.

2. Weighing device according to claim 1,
**characterized in that**
the characteristic curve module is designed to convert the weight signal into the weight measuring signal and the error simulation modules for simulating the weight signal are designed in such a way that they change the weight measuring signal by an error occurring at the weighing device.

3. Weighing device according to claim 1 or 2,
**characterized in that**
each of the several error simulation modules can be switched off.

4. Weighing device according to any one of claims 1 to 3,
**characterized in that**
the weighing device has several load cells, wherein the signals of the individual load cells are combined to form the weight measuring signal.

5. Weighing device according to any one of claims 1 to 4,
**characterized in that**
the load cell(s) has / have one or more strain gauges.

6. Weighing device according to any one of claims 1 to 5,
**characterized in that**
the load cells are integrated into the weighing device with rigid connections.

7. Weighing device according to any one of claims 1 to 6,
**characterized in that**
the weighing device has a temperature sensor arranged on or near at least one of the load cells for detecting the temperature.

8. Weighing device according to any one of claims 1 to 7,
**characterized in that**
at least two or more error simulation modules are provided for correcting each of the following error causes:

- linearity;
- creep (force absorption, load cell);
- hysteresis;
- thermal deviations of the zero point;
- deviations of the zero point with respect to a thermal gradient;
- deviations in the sensitivity of the load cells due to temperature changes;
- blows;

- position of the load;
- lateral forces;
- errors due to inclination.

**9.** Weighing device according to claim 8,
**characterized in that**
the characteristic curve module is designed in such a way that it approximates the characteristic curve of the weighing device with a nonlinear function.

**10.** Weighing method, with a central digital measured value correction, wherein

at least one load cell (3) is used to record a weight measuring signal ($s_m(t)$) which is transmitted via a signal and / or data line to a central analytical unit (9), wherein
the central analytical unit determines the force measured with the weighing device (1) with an analytical unit on the basis of the weight measuring signal, wherein the analytical unit converts the weight measuring signal into a weight signal,
**characterized in that**
a digital function simulator (10) of the weighing device is used to simulate the weighing device with its error effects and thus compensate the errors in the weight signal.

**11.** Weighing method according to claim 10,
**characterized in that**
the digital function simulator has been trained in advance with a training device during a training process in which reference measuring signals have been generated by means of one or more reference loads.

**12.** Weighing method according to claim 11,
**characterized in that**
the training process is based on an iterative optimization process.

**13.** Weighing method according to any one of claims 10 to 12,
**characterized in that**
a characteristic curve module of the function simulator converts the weight measuring signal into the weight signal or vice versa for simulation and the characteristic curve module has characteristic curve parameters which have been predetermined by means of the training process.

**14.** Weighing method according to any one of claims 10 to 13,
**characterized in that**
one or more error simulation modules of the digital function simulator of the weighing device simulate at least one specific error of measurement of the weighing device each, and each error simulation module uses one or more model parameters which have been predetermined by means of the training process.

**15.** Method according to any one of claims 10 to 14,
**characterized in that**
a weighing device according to any one of claims 1 to 9 is used.

**Revendications**

**1.** Dispositif de pesée (1) avec une correction numérique centrale des valeurs de mesure,

qui comprend au moins une cellule de pesée (3)
qui est relié à un dispositif d'évaluation central (9) via une ligne de signal et/ou de données (6,8) pour transmettre un signal de mesure de poids, le dispositif d'évaluation central comportant une unité d'évaluation pour déterminer la force mesurée avec le dispositif de pesée sur la base du signal de mesure de poids,
**caractérisé en ce que** l'unité d'évaluation comprend un modèle fonctionnel numérique (10) du dispositif de pesée, qui présente un ou
plusieurs modules de simulation d'erreurs, chaque module de simulation d'erreurs représentant un modèle du dispositif de pesée qui simule au moins une erreur de mesure spécifique du dispositif de pesée, et chaque module de simulation d'erreurs comportant un ou plusieurs paramètres de modèle avec lesquels le dispositif de pesée est modélisé, un dispositif d'apprentissage étant prévu pour déterminer les paramètres du modèle au cours d'un processus d'apprentissage dans lequel des signaux de mesure de référence sont générés à l'aide d'une ou plusieurs charges de référence,

dans lequel le modèle fonctionnel présente un module de courbe caractéristique (24) qui convertit le signal de mesure de poids en un signal de poids ou vice versa et le module de courbe caractéristique présente des paramètres de courbe caractéristique qui sont déterminés au moyen du dispositif d'apprentissage pendant le processus d'apprentissage.

2.  Dispositif de pesée selon la revendication 1,
    **caractérisé en ce que**
    le module de courbe caractéristique est conçu pour convertir le signal de poids en un signal de mesure de poids et les modules de simulation d'erreurs pour simuler le signal de poids sont conçus de telle manière qu'ils modifient le signal de mesure de poids en raison d'une erreur qui se produit sur le dispositif de pesée.

3.  Dispositif de pesée selon la revendication 1 ou 2, **caractérisé en ce**
    **qu'**un module unique parmi les nombreux modules de simulation d'erreurs peut être désactivé.

4.  Dispositif de pesée selon l'une des revendications 1 à 3, **caractérisé en ce que** le dispositif de pesée présente plusieurs cellules de pesée, les signaux provenant des cellules de pesée individuelles étant combinés pour former le signal de mesure de poids.

5.  Dispositif de pesée selon l'une des revendications 1 à 4, **caractérisé en ce que** la ou les cellules de pesée sont équipées d'une ou plusieurs jauges de contrainte.

6.  Dispositif de pesée selon l'une des revendications 1 à 5, **caractérisé en ce que** les cellules de pesée sont intégrées dans le dispositif de pesée avec des raccords rigides.

7.  Dispositif de pesée selon l'une des revendications 1 à 6, **caractérisé en ce que** le dispositif de pesée comporte un capteur de température qui est agencé sur ou à proximité d'au moins une des cellules de pesée pour détecter la température.

8.  Dispositif de pesée selon l'une des revendications 1 à 7, **caractérisé en ce qu'**au moins deux modules de simulation d'erreurs sont fournis pour corriger l'une des causes de défaillance suivantes :

    - la linéarité ;
    - le fluage (prise de force, cellule de pesée) ;
    - l'hystérésis ;
    - les écarts thermiques du point zéro ;
    - les écarts du point zéro par rapport à une température de 34 degrés ;
    - les écarts de sensibilité des cellules de pesée dus aux changements de température ;
    - les chocs ;
    - la position de la charge ;
    - les forces transversales ;
    - les erreurs due à l'inclinaison.

9.  Dispositif de pesée selon la revendication 8, **caractérisé en ce que**
    le module de courbe caractéristique est conçu de telle sorte qu'il se rapproche de la courbe caractéristique du dispositif de pesée avec une fonction non linéaire.

10. Procédé de pesée avec correction numérique centrale des valeurs de mesure avec au moins une cellule de pesée (3) détectant un signal de mesure du poids ($s_m$(t)) qui est transmis via une ligne de signal et/ou de données (6, 8) à un dispositif d'évaluation central (9), le dispositif d'évaluation central étant doté d'une unité d'évaluation qui détermine la force mesurée avec le dispositif de pesée (1) sur la base du signal de mesure de poids, le dispositif d'évaluation convertissant le signal de mesure de poids en un signal de poids **caractérisé en ce qu'**un modèle fonctionnel numérique (10) du dispositif de pesée est utilisé pour simuler l'appareil de pesée avec ses effets d'erreur afin de compenser les erreurs dans le signal de poids.

**11.** Dispositif de pesée selon la revendication 10, **caractérisé en ce que**
le modèle fonctionnel numérique a été entraîné à l'avance avec un dispositif d'apprentissage au cours d'un processus d'apprentissage dans lequel des signaux de mesure de référence ont été générés à l'aide d'une ou plusieurs charges de référence.

**12.** Procédé de pesée selon la revendication 11, **caractérisé en ce que**
le processus d'apprentissage est basé sur un procédé d'optimisation itératif.

**13.** Dispositif de pesée selon l'une des revendications 10 à 12, **caractérisé en ce qu'**un module de courbe caractéristique du modèle fonctionnel pour la simulation convertit le signal de mesure de poids en un signal de poids ou vice versa et le module de courbe caractéristique présente des paramètres de courbe caractéristique qui ont été déterminés à l'avance au moyen du processus d'apprentissage.

**14.** Procédé de pesée selon l'une des revendications 10 à 13, **caractérisé en ce qu'**un ou plusieurs modules de simulation d'erreurs du modèle fonctionnel numérique de l'appareil de pesée simulent chacun au moins une erreur de mesure spécifique de l'appareil de pesée, et à cet effet chaque module de simulation d'erreur utilise un ou plusieurs paramètres de modèle qui ont été déterminés à l'avance au moyen du processus d'apprentissage.

**15.** Procédé selon l'une des revendications 10 à 14, **caractérisé en ce qu'**un dispositif de pesée est utilisé selon l'une des revendications 1 à 9.

FIG. 1

FIG. 2

FIG. 3

FIG. 4

EP 4 298 410 B1

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0670479 A1
- JP H1137827 A
- DE 102006009005 A1
- GB 1495278 A
- EP 2457070 B1
- EP 2278283 A1

**In der Beschreibung aufgeführte Nicht-Patentliteratur**

- EIGENSCHAFTEN METALLISCHER MESSKÖRPER FÜR DIE WINDKANALMESSTECHNIK. **KÖNIG, HANS GÜNTER.** Dissertation. Technische Hochschule Darmstadt, Juni 1992
- **F. PREISACH.** Über die magnetische Nachwirkung. *Zeitschrift für Physik,* 1935, vol. 94, 277-302
- **P.R. DAHL.** Solid friction damping of mechanical vibrations. *AIAA J,* 1976, vol. 14 (12), 1675-1682
- DYNAMISCHE IDENTIFIKATION STATISCHER HYSTERESE AM BEISPIEL EINES LEITERSEILS. **GUTZER, ULRICH.** Dissertation. Technische Universität Darmstadt, Januar 1998
- SCHWINGUNGSDÄMPFUNG DURCH STATISCHE HYSTERESE. **KOLSCH, H.** Reihe 11: Schwingungstechnik. Fortschrittberichte VDI; VDI-Verlag, 1993, vol. 190
- **KARL JOHAN ÄSTRÖM, C.** Canudas de Wit Revisiting the LuGre Friction Model; Stick-slip motion and rate dependence. *IEEE Control Systems Magazine,* 2008, vol. 28 (6), 101-114